# EUROPÄISCHE PATENTSCHRIFT

(11) **EP 0 743 468 B1**
(45) Veröffentlichungstag und Bekanntmachung des Hinweises auf die Patenterteilung: **14.10.1998**
(21) Anmeldenummer: 96106380.7
(22) Anmeldetag: 23.04.1996
(51) Int. Cl.: F16D 48/02, F16D 25/08, F16D 25/12

(54) **Hydraulischer Aktuator und damit ausgestattete Kupplung**
Hydraulic actuator and clutch provided therewith
Actuateur hydraulique et embrayage équipé du même

(30) Priorität: 26.04.1995 AT 723/95
(43) Veröffentlichungstag der Anmeldung: 20.11.1996
(73) Patentinhaber: STEYR-DAIMLER-PUCH AKTIENGESELLSCHAFT, 1010 Wien (AT)
(72) Erfinder: Schönleitner, Anton, Ing., 4400 Steyr (AT)
(74) Vertreter: Kovac, Werner

(56) Entgegenhaltungen:
- FR-A- 1 530 883
- GB-A- 689 688

## Beschreibung

Die Erfindung betrifft einen hydraulischen Aktuator, bestehend aus einem Zylinder und aus einem Kolben, dessen Primärseite mit einer Arbeitsflüssigkeit beaufschlagbar ist und auf dessen Sekundärseite eine aus dem Zylinder ragende Kolbenstange angeordnet ist, wobei die Arbeitsflüssigkeit von einer Druckölquelle kommt und auch zur Temperierung des Aktuators eingesetzt wird. Derartige Hydraulikzylinder werden in den verschiedensten Formen in allerlei Maschinen und Fahrzeugen verwendet.

Bei sehr tiefen Temperaturen, denen sie beim Betrieb in strengen Wintern oder in der subarktischen Zone ausgesetzt sind, ist die Viskosität aller Hydrauliköle so groß, daß die Funktion hydraulischer Aktuatoren stark behindert, wenn nicht gar unmöglich, ist. Das trifft vor allem zu, wenn auch die Hydraulikleitungen der Umgebungstemperatur ausgesetzt sind. Die Behinderung der Funktion macht schnelle und zeitlich präzise Schaltvorgänge unmöglich. Derartige Schaltvorgänge kommen etwa bei der schlupfgesteuerten Betätigung von Kupplungen zum Sperren eines Differentiales vor. Beispiele derartiger Kupplungen und Aktuatoren sind in den DE-OSen 41 13 128 und 44 43 783 beschrieben.

Aus der GB-A-689688 ist ein doppeltwirkender Hydraulikzylinder bekannt, dessen Kolben zwischen der Primär- und der Sekundärseite eine Bohrung mit einem selbststeuerndem Ventil aufweist. Dieses öffnet, wenn der Kolben eine Endstellung erreicht hat. Dadurch kann das Betriebsmedium in denselben Leitungen in derselben Richtung weiter strömen, um eine Verdickung des Betriebsmediums bei extrem tiefen Temperaturen zu verhindern. Dabei tritt jedoch eine Rückwirkung auf den Kolben ein, die schnelles und genaues Ansprechen behindert. Soll der Kolben auch noch während der Strömung durch die Bohrung seine Position beibehalten, muß die Bohrung eine Drosselbohrung sein, die einen hohen Pumpendruck und damit eine hohe Leistungsaufnahme bedingen.

Es ist daher Ziel der Erfindung, einen gattungsgemäßen Aktuator so auszubilden, daß auch bei tiefsten Temperaturen schnelles Schalten zu einem genau bestimmten Zeitpunkt möglich und die Leistungsaufnahme gering ist.

Erfindungsgemäß wird das dadurch erreicht, daß zur Temperierung ein Sekundärkreislauf vorgesehen ist, der von der Druckölquelle über ein Umschaltventil durch Kanäle in der Zylinderwand und den Zylinderraum auf der Sekundärseite des Kolbens führt, wobei je nach Stellung des Umschaltventiles entweder der Sekundärkreislauf auf der Sekundärseite des Kolbens durchströmt oder die Primärseite des Kolbens beaufschlagt wird. Dadurch wird der Arbeitshub des Kolbens nicht durch den Sekundärkreislauf beeinflußt und die Druckquelle braucht nur für einen Kreislauf ausgelegt zu sein.

In dem erst am Umschaltventil abzweigenden Sekundärkreislauf zirkuliert die Hydraulikflüssigkeit immer dann, wenn der Kolben nicht beaufschlagt ist. Sie zirkuliert dadurch aber auch in den Rohrleitungen von der meist zentralen Druckölquelle zu dem Aktuator. Durch diesen ständigen Umlauf wird die Flüssigkeit auf Betriebstemperatur (und damit auf normale Viskosität) gebracht bzw gehalten, sie gibt an den Zylinder und den Kolben Wärme ab und hält auch die Rohrleitungen warm. Wenn das Umschaltventil betätigt wird, spricht der Aktuator ohne Verzögerung an und erreicht auch die erforderliche Geschwindigkeit.

Die Einbeziehung der Sekundärseite des Kolbens in den Sekundärkreislauf hat zwei Vorteile: Erstens wird der nicht unter Druck stehende Teil benutzt, weshalb auch die Flüssigkeit nur mit geringem Gegendruck und daher geringer Ölpumpenleistungsaufnahme bewegt wird. Zweitens wird auch ein Teil der Kolbenstange umspült, wodurch die Wärmeübergangsfläche groß ist.

In Weiterbildung der Erfindung weist der Kolben auf der Primärseite eine in die Kolbenstange reichende, von einer zylindrischen Fläche begrenzte koaxiale Vertiefung auf (Anspruch 2). Diese Vertiefung verringert die Wandstärke und damit die zu erwärmende Masse des Kolbens und der Kolbenstange.

Wenn weiters auf der Primärseite ein Zuleitungsstück in den Kolben und in die von einer Zylinderfläche gebildete Vertiefung ragt, wobei zwischen Zuleitungsstück und der zylindrischen Fläche eine Dichtung vorgesehen ist (Anspruch 3), so wird dieser Effekt noch verstärkt. Vor allem aber wird dies dadurch erreicht, daß die Primärseite und die Sekundärseite des Kolbens mit gleicher Fläche ausgebildet werden können. Dadurch heben sich die stark von der Viskosität des Hydrauliköles abhängigen Staudrucke im Sekundärkreislauf auf die Sekundärseite und über den Rücklauf und den Druckkanal auf die Primärseite gegenseitig auf. Dadurch kann es zu keiner ungewollten Betätigung des Aktuators kommen.

In einer vorteilhaften Weiterbildung ist das Zuleitungsstück in seiner axialen Lage verstellbar (Anspruch 4). Dadurch kann der Hub des Kolbens eingestellt werden. Da das Zuleitungsstück bei der Montage noch von außen zugänglich ist, braucht so die genaue Einstellung erst nach der Montage vorgenommen zu werden, was wegen geringerer Anforderungen an die Genauigkeit die Fertigung verbilligt.

Weiters ist es vorteilhaft, das Umschaltventil gemeinsam mit weiteren Ventilen in einem den Zylinder abschließenden Hydraulikblock unterzubringen (Anspruch 5). Nebst der Montagevereinfachung wird dadurch eine gute Durchwärmung auch an der der Kolbenstange abgewandten Seite des Aktuators erreicht, weil in dem Vorzugsstromventil immer ein Teil der Strömung des Sekundärkreislaufes in den Rücklauf abgezweigt und an der Primärseite des Zylinders vorbeigeleitet wird.

Schließlich wird der erfindungsgemäße Aktuator mit besonderem Vorteil im Gehäuse eines sperrbaren Differentiales oder Verteilergetriebes verwendet, dessen Schaltgabel mit der Kolbenstange fest verbunden ist (Anspruch 6).

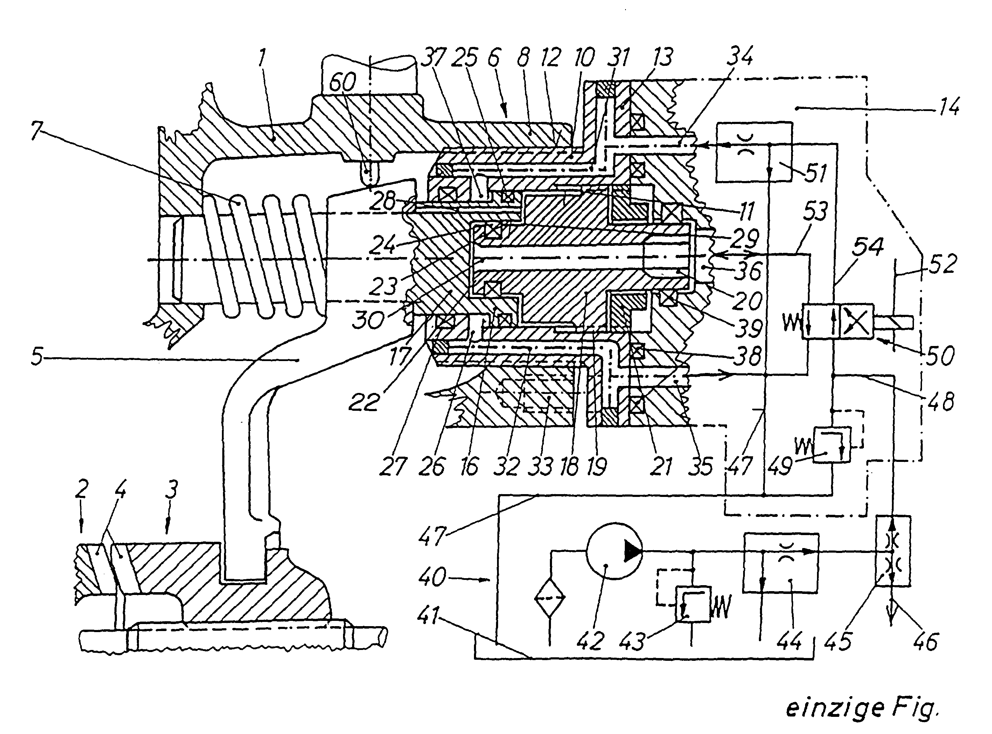

Im folgenden wird die Erfindung anhand einer einzigen Figur beschrieben und erläutert.

Ein Achsgehäuse 1 enthält eine Klauenkupplung 2, deren achsial verschiebbarer Kupplungsteil 3 Stirnklauen 4 aufweist und mittels einer Schaltgabel 5 einrückbar ist. Im dargestellten Beispiel ist noch eine Ausrückfeder 7 zu sehen, die die Kupplung 2 ausrückt, wenn sie kein Drehmoment mehr übertragt.

Bei dem beschriebenen Ausführungsbeispiel ist das Gehäuse 1 ein Achsgehäuse, in dem sich ein nicht dargestelltes Differential befindet, das mittels der Klauenkupplung 2 in bekannter Weise sperrbar ist. Bei dem Gehäuse könnte es sich aber auch um einen Teil einer beliebigen anderen Maschine oder eines anderen Fahrzeuges oder auch nur eines anderen Getriebes, etwa eines Verteilergetriebes handeln. Erfindungswesentlich ist der im folgenden näher beschriebene Aktuator 6, der hier in einen Stutzen 8 des Achsgehäuses 1 eingeschraubt ist.

Der Aktuator 6 wird von einem Hydraulikzylinder 10 gebildet, der mittels eines Gewindes 12 in der durch die gewünschte Hublage der Schaltgabel 5 bedingte Stellung in den Stutzen 8 eingeschraubt ist. Er bildet eine Zylinderwand 11 und endet außerhalb des Stutzens 8 in einer Flanschplatte 13, die fest mit einem Hydraulikblock 14, auf den noch zurückgekommen wird, verbunden ist.

Die Größe des Hubes ist durch Verstellen eines Zuleitungsstükkes 18 im Inneren des Zylinders 10 und die Hublage durch Verstellen des Zylinders 10 im Stutzen 8 einstellbar. Dadurch brauchen diese Einstellungen bei Anwendung auf eine Klauenkupplung erst bei der Montage vorgenommen zu werden, dadurch ist ein gutes Tragbild und ein minimaler Zustellweg gesichert. Letzteres tragt zu einem schnellen Einrücken der Kupplung bei.

Im Inneren des Zylinders 10 befindet sich ein Kolben 16, an den einstückig eine Kolbenstange 17 anschließt, die aus dem Zylinder 10 (im Bild nach links) herausgeführt ist und die Schaltgabel 5 trägt. Die der Kolbenstange 17 abgewandte Seite des Kolbens 16 ist die Primärseite des Kolbens 16; die Seite, an der die Kolbenstange 17 anschließt, ist die Sekundärseite. Soweit beschrieben, kann es sich auch um eine allgemein übliche Zylinder-Kolbeneinheit handeln, auf die die Erfindung ebenso anwendbar ist. Im beschriebenen Ausführungsbeispiel sind jedoch noch weitere vorteilhafte Merkmale verwirklicht.

Auf der Primärseite des Kolbens 16 ragt das Zuleitungsstück 18 in das Innere des Hydraulikzylinders 10. Es ist mittels eines Gewindes 19 in den Hydraulikzylinder in der dem gewünschten Hub entsprechenden Tiefe eingeschraubt, wozu es einen Innensechskant 20 aufweist und mittels eines Fixierstückes 21 nach Art einer Kontermutter in der eingestellten Position fixiert ist. Der Kolben 16 weist auf der Primärseite eine Vertiefung 22 auf, die bis in die Kolbenstange 17 hineinreicht und von einer zylindrischen Fläche 23 begrenzt ist. Zwischen dieser und dem Zuleitungsstück 18 ist eine Primärdichtung 24 vorgesehen, deren Außendurchmesser die Fläche begrenzt, auf die der der Betätigung dienende Primärdruck wirkt. Weiters ist eine Sekundärdichtung 25 am äußeren Umfang des Kolbens 16 vorgesehen, die diesen gegenüber der Innenwand 11 des Zylinders 10 abdichtet.

Der Kolben bildet mit dem unteren Abschluß des Hydraulikzylinders 10 einen zylindrischen Ringraum 26 auf der Sekundärseite des Kolbens 16. Dieser ist weiters durch eine Kolbenstangendichtung 27 abgeschlossen. Zur Entlüftung des Raumes 29 zwischen den beiden Dichtungen 24,25 ist eine Atmungsbohrung 28 vorgesehen. Im Inneren des Zuleitungsstückes 18 ist, von dem Innensechskant 20 ausgehend, ein zentrischer Druckkanal 30 ausgebildet, durch den der Primärdruck auf die Vertiefung 22 des Kolbens wirkt.

Im Hydraulikzylinder 10 ist weiters ein erster und ein zweiter Spülkanal 31, 32 vorgesehen. Beide Kanäle 31,32 stehen mit dem Zylinderraum 26 auf der Sekundärseite des Kolbens 16 und mit dem Hydraulikblock 14 in Strömungsverbindung. Die Kanäle 31,32 sind im dargestellten Ausführungsbeispiel entsprechend den geometrischen Gegebenheiten aus mehreren teils mit Stopfen verschlossenen Bohrungen gebildet. Für den Austritt in den Ringraum 26 ist ein Ringkanal 37 von innen in den Zylinder 11 eingearbeitet.

Der Hydraulikblock 14 weist eine erste Sekundärbohrung 34, eine zweite Sekundärbohrung 35 und eine Druckbohrung 36 auf. Diese sind von Dichtringen 38,39 umgeben, die einen druckdichten Anschluß sichern, wenn der Hydraulikblock 14 mittels Bolzen 33 auf die Flanschplatte 13 und mit dieser gemeinsam auf den Flansch 8 des Achsgehäuses geschraubt wird. Die Verbindung von Hydraulikblock 14 und Flanschplatte 13 kann im Rahmen der Erfindung in beliebiger anderer Weise ausgeführt sein, wobei im Hinblick auf die Genauigkeit der Verstellung der Hublage noch weitere Maßnahmen getroffen werden können.

Der Hydraulikteil wird von einer Druckölquelle 40 aus versorgt. Diese besteht aus einem Hydraulikölbehälter 41, einer Ölpumpe 42, einem ersten Druckbegrenzungsventil 43, einem ersten Vorzugsstromventil 44 und einem Rücklauf 47. Diese Druckölquelle 40 führt das Drucköl in der durch das Ventil 44 bestimmten Menge mit dem durch das Ventil 43 bestimmten Druck einem Proportionalstromteiler 45 zu. Von diesem aus wird ein festgelegter Teil des geförderten Hydrauliköles über die Leitung 46 einem anderen Aktuator (beispielsweise für die Betätigung einer weiteren Differentialsperre) zugeführt und über die Leitung 48 dem Hydraulikblock 14.

In dem Hydraulikblock 14 ist ein zweites Druckbegrenzungsventil 49 und ein Umschaltventil 50 vorgesehen, welches hier als 4/2-Magnetventil ausgebildet ist. Es ist über ein zweites Vorzugsstromventil 51 mit der ersten Sekundärbohrung 34 und damit mit dem ersten Spülkanal 31 verbunden. Weiters führt von dem Umschaltventil 50 eine Leitung 53 zur Druckbohrung 36 und somit auf die Primärseite des Kolbens. Das Umschaltventil wird über eine Leitung 52 angesteuert. Mit 54 ist noch eine Leitung bezeichnet, über die bei Abfallen des Umschaltventiles 50 das Hydrauliköl von der Primärseite des Kolbens 16 zum Rücklauf 47 gelangt. Mit 60 ist schließlich noch ein Taster bezeichnet, der vorgesehen sein kann, um der das Umschaltventil 50 ansteuernden Steuereinheit (nicht dargestellt) ein Rückmeldesingal zu geben.

Die Arbeitsweise ist die folgende: auf der Abbildung befindet sich das Umschaltventil 50 in der Ruhestellung, in der der Aktuator 6 keine Kraft ausübt, und in der das von der Druckölquelle 40 gelieferte Fluidum von dem Umschaltventil 50 in den Sekundärkreislauf gelenkt wird, der den Aktuator auf Betriebstemperatur hält und damit ein schnelles Ansprechen sichert. Das Hydrauliköl strömt vom zweiten Vorzugsstromventil 51 über die erste Sekundärbohrung 34 im Hydraulikblock 14 über den ersten Spülkanal 31 durch den Hydraulikzylinder 11, in den sekundärseitigen Ringraum 26 und von diesem durch den zweiten Spülkanal 32 wieder in die zweite Sekundärbohrung 35 des Hydraulikblockes 14 und von dort über in den Rücklauf 47 zurück in den Ölbehälter 41.

Bei ausreichend dimensionierten Querschnitten wird dank dem Ventil 51 eine bestimmte Menge mit relativ geringem Druck (der dem Druckverlust im Sekundärkreislauf entspricht) diesen Sekundärkreislauf durchlaufen, wodurch der Verbrauch an Pumpenleistung auch nur gering ist.

Wird nun das Umschaltventil 50 angesteuert, so wird die Zufuhr zum Sekundärkreislauf abgesperrt und der Zulauf 48 wird mit der Zuleitung 53 strömungsverbunden. Da auf diesem Weg kein Rücklauf vorgesehen ist, wird sich der Druck in der Zuleitung und im Druckkanal 30 auf der Primärseite des Kolbens 16 sehr schnell aufbauen, was gegebenenfalls noch durch andere Hilfsmittel beschleunigt werden kann, und den vorgewärmten Kolben 16 im ebenfalls vorgewärmten Zylinder 11 verschieben. Der Sekundärkreislauf ist drucklos, weil er mit dem Rücklauf 47 in Strömungsverbindung steht.

Sobald das Umschaltventil 50 abfällt, wird wieder der Sekundärkreislauf gespeist, unabhängig von der Stellung der Schaltgabel 5. Um diese Unabhängigkeit unter allen Umständen sicherzustellen, können durch die besondere Konstruktion des Kolbens 16 und des Zuleitungsstückes 18 die Kolbenfläche auf der Primärseite und die auf der Sekundärseite aufeinander abgestimmt werden. Bei der Anwendung auf eine Klauenkupplung, die bei Wegfall des Drehmomentes durch die genau festgelegte Kraft der Feder 7 ausgerückt wird bedeutet das, daß diese Kraft nicht durch hydraulische Einflüße verfälscht wird.

## Patentansprüche

1. Hydraulischer Aktuator (6), bestehend aus einem Zylinder (10) und aus einem Kolben (16), dessen Primärseite mit einer Arbeitsflüssigkeit beaufschlagbar ist und auf dessen Sekundärseite eine aus dem Zylinder ragende Kolbenstange (17) angeordnet ist, wobei die Arbeitsflüssigkeit von einer Druckölquelle (40) kommt und auch zur Temperierung des Aktuators eingesetzt wird, **dadurch gekennzeichnet**, daß zur Temperierung ein Sekundärkreislauf vorgesehen ist, der von der Druckölquelle (40) über ein Umschaltventil (50) durch Kanäle (31,32) in der Wand des Zylinders (10) und den Zylinderraum (26) auf der Sekundärseite des Kolbens (16) führt, wobei je nach Stellung des Umschaltventiles (50) entweder der Sekundärkreislauf auf der Sekundärseite des Kolbens (16) durchströmt oder die Primärseite des Kolbens beaufschlagt wird.

2. Hydraulischer Aktuator nach Anspruch 1, **dadurch gekennzeichnet**, daß der Kolben (16) auf der Primärseite eine in die Kolbenstange (17) reichende, von einer zylindrischen Fläche (23) begrenzte koaxiale Vertiefung (22) aufweist.

3. Hydraulischer Aktuator nach Anspruch 2, **dadurch gekennzeichnet**, daß auf der Primärseite ein Zuleitungsstück (18) in den Kolben (16) und in die von einer zylindrischen Fläche (23) gebildete Vertiefung (22) ragt, wobei zwischen Zuleitungsstück (18) und der zylindrischen Fläche (23) eine Dichtung (24) vorgesehen ist.

4. Hydraulischer Aktuator nach Anspruch 3, **dadurch gekennzeichnet**, daß das Zuleitungsstück (18) in seiner axialen Lage verstellbar ist.

5. Hydraulischer Aktuator nach Anspruch 1, **dadurch gekennzeichnet**, daß das Umschaltventil (50) gemeinsam mit weiteren Ventilen (49,51) in einem den Zylinder (11) abschließenden Hydraulikblock (14) untergebracht ist.

6. Kupplung (2) in einem Gehäuse (1) eines sperrbaren Differentiales oder Verteilergetriebes mit einem hydraulischen Aktuator (6) nach einem der vorhergehenden Ansprüche, deren Schaltgabel (5) mit der Kolbenstange (17) fest verbunden ist.

## Claims

1. Hydraulic actuator (6), consisting of a cylinder (10) and a piston (16) whose primary face is attacked by a working fluid and from whose secondary face protrudes a piston rod (17), the working fluid being furnished by a pressure fluid source (40) and being also used for tempering the actuator, caracterized in that in order to temperate the actuator, a secondary circuit leads from the pressure fluid source (40) via a changeover valve (50) through channels (31,32) in the wall of the cylinder (10) and through the cylinder space (26) to the secondary face of the piston (16), whereby, depending on the position of the changeover valve (50), either the secondary circuit on the side of the secondary face of the piston (16) is followed or the primary face of the piston is attacked.

2. Hydraulic actuator according to claim 1, **caracterized** in that on the side of the primary face of the piston (16) a coaxial cavity (22) is provided, which is circumscribed by a cylindrical surface (23) and extends into the piston rod (17).

3. Hydraulic actuator according to claim 1, **caracterized** in that an adduction piece (18) protrudes into the piston (16) and into the cavity (22) circumscribed by a cylindrical surface (23) on the primary side of the piston, a seal (24) being provided between the adduction piece (18) and the cylindrical surface (23).

4. Hydraulic actuator according to claim 1, **caracterized** in that the axial position of the adduction piece (18) is adjustable.

5. Hydraulic actuator according to claim 1, **caracterized** in that the changeover valve (50) is housed, together with further valves (49,51), in a hydraulics block (14), the latter closing the cylinder (11).

6. Clutch (2) in the casing (1) of a lockable differential or of a transfer gearbox provided with a hydraulic actuator (6) according to either of the preceding claims, the shifting fork (5) of the coupling being rigidly connected with the piston rod (17).

## Revendications

1. Actionneur hydraulique (6), composé d'un cylindre (10) et d'un piston (16) dont le côté primaire peut être chargé par un liquide de travail et sur le côté secondaire duquel est agencée une tige de piston (17) qui émerge hors du cylindre, le liquide de travail arrivant d'une source de pression d'huile (40) et servant aussi pour la mise en température de l'actionneur, caractérisé en ce que, pour la mise en température, il est prévu un circuit secondaire qui va de la source de pression d'huile (40), par une valve d'inversion (50), et en parcourant des canaux (31, 32) ménagés dans la paroi du cylindre (10), à la chambre (26) du cylindre située sur le côté secondaire du piston (16), cependant que, selon la position de la valve d'inversion (50), soit le circuit secondaire prévu sur le côté secondaire du piston (16) est parcouru par l'écoulement, soit le côté primaire du piston est chargé.

2. Actionneur hydraulique selon la revendication 1, caractérisé en ce que le piston (16) présente, sur le côté primaire, un évidement coaxial (22) limité par une surface cylindrique (23), et qui se prolonge dans la tige de piston (17).

3. Actionneur hydraulique selon la revendication 2, caractérisé en ce que, sur le côté primaire, un tronçon de conduite d'arrivée (18) est engagé dans le piston (16) et dans l'évidement (22) formé par une surface cylindrique (23), cependant qu'une garniture d'étanchéité (24) est prévue entre le tronçon de conduite d'arrivée (18) et la surface cylindrique (23).

4. Actionneur hydraulique selon la revendication 3, caractérisé en ce que le tronçon de conduite d'arrivée (18) est réglable en position axiale.

5. Actionneur hydraulique selon la revendication 1, caractérisé en ce que la valve d'inversion (50) est logée, conjointement avec d'autres valves (49, 51), dans un bloc hydraulique (14) qui ferme le cylindre (11).

6. Embrayage (2) prévu dans le carter (1) d'un différentiel à blocage ou d'une boîte de transfert, équipé d'un actionneur hydraulique (6) selon une des revendications précédentes, et dont la fourchette de manoeuvre (5) est rigidement solidaire de la tige de piston (17).
